Europäisches Patentamt

European Patent Office

Office européen des brevets

(11) Numéro de publication: **0 432 226 B1**

## FASCICULE DE BREVET EUROPEEN

(45) Date de publication de fascicule du brevet: **11.05.94**  (51) Int. Cl.5: **C08L 23/08**, C08L 23/16

(21) Numéro de dépôt: **90906258.0**

(22) Date de dépôt: **30.03.90**

(86) Numéro de dépôt internationale :
**PCT/FR90/00225**

(87) Numéro de publication internationale :
**WO 90/12064 (18.10.90 90/24)**

(54) **COMPOSITION ET PROCEDE POUR DIMINUER LE CARACTERE COLLANT DE COPOLYMERES ETHYLENE/ALPHA-OLEFINES.**

(30) Priorité: **06.04.89 FR 8904528**

(43) Date de publication de la demande:
**19.06.91 Bulletin 91/25**

(45) Mention de la délivrance du brevet:
**11.05.94 Bulletin 94/19**

(84) Etats contractants désignés:
**AT BE CH DE DK ES FR GB IT LI LU NL SE**

(56) Documents cités:
**EP-A- 0 037 453**
**FR-A- 2 093 589**

(73) Titulaire: **ECP-ENICHEM POLYMERES FRANCE S.A.**
**11 rue de l'Abreuvoir**
**F-92411 Courbevoie(FR)**

(72) Inventeur: **MORESE-SEGUELA, Brigitte**
**291, chemin d'Enbas**
**F-62232 Hinges(FR)**
Inventeur: **COUDEVYLLE, Urbain**
**44, rue Pasteur**
**F-59480 Salomé(FR)**

Rank Xerox (UK) Business Services
(3.10/3.09/3.3.3)

## Description

La présente invention concerne un procédé pour diminuer le caractère collant et d'augmenter la résistance à l'écrasement de copolymères éthylène/alpha-oléfines de très basse densité, partiellement cristallins, ainsi que des compositions non collantes et résistantes à l'écrasement de tels copolymères et un procédé pour préparer lesdites compositions.

Les copolymères de l'éthylène et d'au moins une alpha-oléfine présentent un caractère collant d'autant plus prononcé que leur teneur en alpha-oléfine est plus élevée. En termes de densité, on peut dire que le caractère collant apparaît quand leur densité est inférieure à 0,900. Les copolymères éthylène/alpha-oléfines de densité inférieure à 0,890 sont généralement conditionnés sous forme de pastilles, granulés, blocs ou pains. Leur caractère collant ne pose pas de problème particulier lorsqu'ils se présentent sous forme de blocs ou pains. Par contre lorsqu'ils sont conditionnés sous forme de pastilles ou granulés de faibles dimensions (par exemple 1 à 5 mm environ), il est difficile de les transporter et de les conserver dans cet état, c'est-à-dire d'éviter leur reprise en masse après un stockage de durée prolongée car ils présentent une tendance marquée à s'agglomérer en formant des blocs compacts. Divers moyens proposés précédemment pour résoudre ce type de problème dans le cas de divers élastomères éthyléniques, tels que l'enrobage de la surface des granulés au moyen d'une huile de silicone ou d'un agent tensio-actif non-ionique tel qu'un copolymère d'oxyde de propylène et d'oxyde d'éthylène, ne donnent pas entière satisfaction car s'ils réduisent considérablement le caractère collant au moment du traitement, permettant de ce fait une granulation sensiblement correcte, leur effet diminue au cours du temps. De plus, les granulés traités aux huiles de silicone ou par des copolymères d'oxyde d'éthylène et d'oxyde de propylène ne résistent pas à l'écrasement ; on constate après une durée de stockage prolongé sous contrainte (soit le poids des granulés sur les autres dans un sac, soit le poids des sacs supérieurs sur ceux de la première couche dans un stockage sur palette) que les granulés ont tendance à s'aplatir, s'agglomérer et former une masse compacte difficilement manipulable.

Par ailleurs, le brevet FR-A-2 093 589 décrit des mélanges de (co)polymères cristallins d'alpha-monooléfines et d'un caoutchouc amorphe éthylène-propylène ou éthylène-propylène-diène, la quantité de (co)polymère cristallin étant de 1 à 30 parties pour 100 parties en poids du caoutchouc. Selon les exemples de ce document on peut employer comme (co)polymère cristallin un polypropylène atactique ou un polypropylène d'indice de fluidité égal à 3. Le caoutchouc amorphe utilisé présente une viscosité Mooney comprise entre 20 et 120.

De son côté, le brevet EP-A-037 453 décrit un mélange comprenant un polymère éthylène-propylène normalement sujet au fluage à température ambiante et dans des conditions de stockage et une quantité (de préférence jusqu'à 20% en poids du polymère) de polypropylène suffisante pour réduire le fluage. Le polymère éthylène-propylène concerné a une viscosité Mooney de 10 à 100 et comprend de 40 à 60% en moles d'éthylène. De préférence le polypropylène choisi a un indice de fluidité mesuré à 230°C sous 2,16 kg) de 0,5 à 30 dg/min.

Les solutions préconisées par les deux derniers documents cités, qui conviennent pour des élastomères le plus souvent amorphes, présentant un viscosité Mooney et possédant généralement une densité inférieure à 0,86, ne conviennent pas pour des copolymères éthylène/alpha-oléfine partiellement cristallins, ne présentant pas de viscosité Mooney et possédant une densité comprise ente 0,865 et 0,900 environ. En effet l'addition à ceux-ci, dans les proportions recommandées, d'un polypropylène atactique ou d'un polypropylène isotactique de faible indice de fluidité ne permet pas de réduire significativement le caractère collant et la résistance à l'écrasement.

La présente invention se propose de résoudre ce problème en procurant un procédé qui, simultanément, permet de diminuer le caractère collant et d'augmenter la résistance à l'écrasement de copolymères d'éthylène et d'alpha-oléfines partiellement cristallins et de densité comprise ente 0,865 et 0,900 environ.

Un premier objet de la présente invention consiste en un procédé permettant de diminuer le caractère collant et d'augmenter la résistance à l'écrasement d'un copolymère partiellement cristallin (E) de l'éthylène et d'au moins une alpha-oléfine, ayant une densité comprise entre 0,865 et 0,900, caractérisé en ce qu'il consiste à mélanger intimement ledit copolymère d'éthylène avec au moins un polymère ou copolymère non-atactique du propylène (P) ayant un indice de fluidité (mesuré selon la norme ASTM D 1238, condition L) compris entre 35 et 200 dg/min, en une proportion allant de 22 jusqu'à 50 parties en poids pour 100 parties en poids de copolymère d'éthylène.

Le copolymère partiellement cristallin de l'éthylène comprend généralement de 6 à 23% en moles environ d'au moins une alpha-oléfine ayant avantageusement de 3 à 8 atomes de carbone, de préférence le propylène ou le butène-1, et possède un taux de cristallinité (mesuré par diffraction des rayons X) au moins égal à 1%. Son indice de fluidité est généralement compris ente 0,1 et 100 dg/min., de préférence entre 0,3

2

et 15 dg/min. Des exemples de tels copolymères sont notamment :

- les caoutchoucs polyoléfiniques commercialisés par la société MITSUI sous la marque TAFMER ®, consistant en des copolymères de 78 à 92% en moles d'éthylène et de 8 à 22% en moles d'une alpha-oléfine choisie parmi le propylène et le butène-1, ayant une densité de 0,860 à 0,890, ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7 ;

- des caoutchoucs polyoléfiniques consistant en des copolymères éthylène/propylène et/ou butène-1, ayant un indice de fluidité compris entre 0,3 et 15 dg/min environ et une densité comprise entre 0,865 et 0,885 environ, comprenant de 77 à 91% en modes de motifs dérivés de l'éthylène et de 9 à 23% en modes de motifs dérivés du propydène et/ou du butène-1, et possédant une température de fusion cristaldine J comprise entre 100° et 125°C environ. Subsidiairement, ce caoutchouc polyoléfinique peut être caractérisé par au moins l'un des éléments suivants :

    - un indice de polydispersité compris entre 3,5 et 15 environ, de préférence, entre 4 et 8 environ,
    - une masse moléculaire géométrique moyenne (définie comme indiqué ci-après) comprise entre 35 et 70 kg/mole environ,
    - une relation entre la densité d et la teneur x (exprimée en % en modes) en motifs dérivés du propylène et du butène-1 qui se traduit par la double équation :

$$0,9084 \leq d + 0,002 \, x \leq 0,918$$

    - un taux de cristallinité résiduelle (déterminé selon la méthode décrite ci-après) compris entre 3 et 15% environ.

Par température de fusion cristalline J, on entend la température déterminée au maximum de la courbe de fusion après cristallisation obtenue en soumettant l'échantillon de copolymère au processus en trois étapes suivant :

- fusion à la vitesse de 8°C par minute depuis 10°C jusqu'à 150°C, puis
- cristallisation à la vitesse de 8°C par minute depuis 150°C jusqu'à 10°C, puis à nouveau
- fusion à la vitesse de 8°C par minute depuis 10°C jusqu'à 150°C.

Le taux de cristallinité résiduelle est déterminé par diffraction des rayons X sur un échantillon de copolymère ayant subi un refroidissement à la vitesse de 5°C par heure depuis 190°C jusqu'à la température ambiante.

La masse moléculaire géométrique moyenne est définie par la relation mathématique :

$$\log_{10} Mg = \sum_{i=1}^{i=N} W_i \log_{10} M_i$$

où $W_i$ est la fraction en poids de matière de masse $M_i$ et N est le nombre de fractions éluées par chromatographie sur gel perméable. Un tel caoutchouc polyoléfinique peut être obtenu par un procédé consistant à copolymériser, à une température de 160° à 270°C environ et sous une pression de 400 à 850 bars environ, un flux gazeux contenant de 18 à 42% environ en volume d'éthylène et de 58% à 82% environ en volume de propylène et/ou de butène-1, en présence d'un système catalytique de type Ziegler comprenant, d'une part, au moins un composé de métal de transition des groupes IVB, VB, VIB et VIII de la Classification Périodique, et d'autre part, au moins un composé organo-aluminique, et, le cas échéant, en présence d'au moins un agent de transfert de chaîne. Le système catalytique peut en outre comprendre au moins un halogénure d'aluminium ou de magnésium. Pour atteindre les copolymères possédant des caractéristiques décrites ci-dessus, et dans lesquels le rapport molaire

$$\frac{\text{motifs dérivés du propylène}}{\text{motifs dérivés du butène-1}}$$

3

dépasse 0,5, la composition du flux gazeux soumis à la copolymérisation sera de préférence telle que de rapport en volume

$$\frac{\text{propylène}}{\text{butène-1}}$$

dépasse 0,3 environ selon la nature du système catalytique utilisé. Le choix de celui-ci a en effet une influence, connue de l'homme de d'art, sur la réactivité relative de l'éthylène, du propylène et du butène-1 dans la copolymérisation et par conséquent sur la tendance à incorporer préférentiellement des motifs dérivés du propylène ou bien des motifs dérivés du butène-1 dans la chaîne macromoléculaire.

Par polymère ou copolymère (P) non-atactique du propylène, on entend selon l'invention un homopolymère ou copolymère du propylène à structure avantageusement isotactique. Il possède avantageusement une densité comprise entre 0,89 et 0,91, un indice d'isotacticité (mesuré selon la norme ISO 1873) d'au moins 94% et un taux de cristallinité (mesuré par diffraction des rayons X) d'au moins 45%. Il peut être obtenu par polymérisation en présence de catalyseurs de type Ziegler stéréospécifiques, par exemple en suspension dans un solvant ou en phase liquide. Pour la mise en oeuvre de l'invention, le polymère (P) se présente, de préférence, sous forme de poudre ou granulés. On peut également utiliser du polypropylène syndiotactique. La quantité de polymère ou copolymère (P) ajoutée au copolymère (E) est d'autant plus importante que la densité (d) du copolymère (E) est plus faible, ou que l'on désire obtenir un effet plus marqué (pouvant aller jusqu'à disparition totale du caractère collant) pour une densité donnée. Pour la mise en oeuvre du procédé selon l'invention, cette quantité est telle que la proportion pondérale (q) de polymère ou copolymère (P) dans le mélange obtenu, exprimée en %, est reliée à la densité (d) par la relation : $q \geq 600 - 667\ d$. Elle est avantageusement d'au moins 10 parties en poids pour 100 parties de copolymère (E).

Par mélange intime, on entend que le copolymère (E) forme avec le polymère ou copolymère (P) après addition de ce dernier, un mélange homogène dans lequel des particules discrètes de chacun des composants ne sont pas discernables macroscopiquement. Ainsi, un simple mélange de granulés ne convient pas. Un des moyens les mieux adaptés à d'obtention de ce mélange intime est de malaxage des composants à l'état fondu suivi, si besoin est, d'une granulation de la composition obtenue.

Un deuxième objet de la présente invention consiste en une composition thermoplastique comprenant, pour 100 parties en poids d'un copolymère partiellement cristallin (E) de l'éthylène et d'au moins une alpha-oléfine, ayant une densité comprise entre 0,865 et 0,900, de 22 à 50 parties en poids d'au moins un polymère non-atactique du propylène (P) ayant un indice de fluidité (mesuré selon la norme ASTM D 1238, condition L) compris entre 35 et 200 dg/min. Les définitions du copolymère (E) et du polymère ou copolymère (P) données ci-dessus s'appliquent également ici.

Les compositions sont celles pour lesquelles la proportion pondérale (q) en polymère ou copolymère (P), exprimée en %, est reliée à la densité (d) du copolymère (E) par la formule :

$q \geq 600 - 667\ d$

Les compositions selon l'invention peuvent en outre comprendre des quantités usuelles d'antioxydants et/ou de stabilisants contre le rayonnement ultraviolet, ainsi que le cas échéant, jusqu'à 100 parties en poids, pour 100 parties de la composition, de charges minérales telles que talc, mica, craie, billes de verre, hydroxyde d'aluminium, ou de charges organiques telles que la sciure de bois. Ces charges peuvent être incorporées par des moyens usuels tels qu'un mélangeur interne.

Les compositions selon l'invention peuvent être transformées en films, feuilles, plaques, joncs, profilés, corps creux, articles industriels obtenus par injection.

Elles sont avantageusement obtenues par mélange des constituants à l'état fondu, par exemple, dans un malaxeur, un mélangeur interne ou une extrudeuse monovis ou bivis à simple ou double alimentation puis, le cas échéant, elles sont transformées en granulés. Les compositions préférées évoquées ci-dessus conduisent alors à des granulés ne présentant pas de caractère collant et ayant une très bonne résistance à d'écrasement.

Un autre mode de préparation des compositions selon d'invention est décrit ci-après.

Un troisième objet de la présente invention concerne un procédé particulier de préparation des compositions ci-dessus consistant, lors de la préparation en continu d'un copolymère (E), à introduire dans de copolymère (E) fondu la quantité voulue de polymère ou copolymère (P) également à l'état fondu. Cette introduction est possible quelles que soient des conditions de polymérisation. Elle peut être notamment réalisée dans le cadre d'un procédé opérant sous haute pression (300 à 3000 bars) et à haute température (160° à 350°C) en présence d'un système catalytique de type Ziegler. Une installation pour la mise en oeuvre de ce procédé comprend par exemple un réacteur alimenté en mélange d'éthylène et de comonomères au moyen successivement d'un compresseur primaire et d'un compresseur secondaire, un premier séparateur opérant sous une pression d'environ 250 bars dans lequel le mélange réactionnel provenant du réacteur est admis et séparé, d'une part, en copolymère (E) dirigé vers un deuxième séparateur opérant sous une pression d'environ 70 bars et, d'autre part, en éthylène et comonomères n'ayant pas réagi, dirigés vers l'aspiration du compresseur secondaire. Le flux de copolymère (E) entrant dans de deuxième séparateur y est séparé, d'une part, en copolymère (E) dirigé vers un troisième séparateur, et d'autre part, en éthylène et comonomères n'ayant pas réagi vers l'aspiration du compresseur primaire. Dans le troisième séparateur, encore appelé trémie, fonctionnant sous une pression d'environ 1 à 2 bars, le copolymère (E) est dégagé et évacué vers une extrudeuse, puis un granulateur.

L'introduction du polymère ou copolymère (P) dans l'installation peut avoir dieu dans un des séparateurs, de préférence le troisième. Avantageusement, de façon à assurer l'homogénéité des compositions obtenues, l'introduction a dieu dans le flux du copolymère (E) fondu, par exemple dans une conduite d'alimentation d'un séparateur. Il est également possible d'utiliser, en tant qu'extrudeuse, une extrudeuse à double entrée dont la seconde entrée reçoit le polymère ou copolymère (P).

Les exemples suivants ont pour but d'illustrer l'invention de manière non limitative. Les parties, sauf indication contraire, sont exprimées en poids.

Les déterminations et mesures suivantes sont effectuées sur les copolymères (E) et sur des compositions obtenues :

-CC: caractère collant déterminé au moyen d'un test qui consiste à emplir de granulés, à ras bords, un entonnoir de forme tronconique ayant un grand diamètre de 15 cm, une hauteur de partie conique de 13 cm et un diamètre d'orifice de 14, 18 ou 25 mm, puis à mesurer le temps (t) exprimé en secondes mis par les granulés pour s'écouler entièrement. La mesure est effectuée après différents temps de stockage à température ambiante, en absence de contrainte (stockage en sachets en plastique maintenus à plat).

-RE: résistance à l'écrasement déterminée au moyen d'un test qui consiste à disposer des granulés à ras bords dans un récipient cylindrique en polyéthylène de hauteur 11 cm et de diamètre 12 cm. Une masse de 10 kg (cylindre en plomb de diamètre 11 cm) est alors appliquée sur les granulés pendant une durée (T) déterminée. Après le temps T choisi, on mesure le temps (t') mis par des granulés pour évacuer entièrement le récipient cylindrique lorsque l'on retourne celui-ci après avoir ôté la masse appliquée.

Les résultats des mesures figurent au tableau ci-après.

Exemple 1 (comparatif)

Des granulés ayant la forme de lentilles (diamètre moyen : environ 4 mm, hauteur moyenne au centre : environ 2 mm) d'un copolymère (E) d'éthylène (78% en moles), de propylène (12% en modes) et de butène-1 (10% en modes) ayant une densité (mesurée selon la norme ASTM D792) égale à 0,872 et un indice de fluidité (mesuré selon la norme ASTM D 1238 condition E) égal à 2,6 dg/min présentent un caractère collant tel que lesdits granulés, soumis au test correspondant, nécessitent une durée de 150 secondes pour évacuer l'entonnoir ayant un diamètre d'orifice de 25 mm, après un stockage de 6 jours. Après 15 jours de stockage, ils ne peuvent plus passer cet orifice. Leur résistance à l'écrasement est pratiquement nulle : après 1 jour d'application de la masse utilisée dans le test correspondant, il se forme un bloc compact ne s'écoulant pas.

Exemples 2 et 3

Au nombre de parties, figurant au tableau ci-après, du copolymère (E) de l'exemple 1, on ajoute, par malaxage à 180°C pendant une durée de 6 min, la quantité indiquée au tableau ci-après d'homopolymère (P) du propylène ayant une densité de 0,90, un indice de fluidité (mesuré selon la norme ASTM D 1238 condition L) égal à 45 dg/min, un taux de cristallinité (mesuré par diffraction des rayons X) égal à 65%, commercialisé sous la dénomination HOSTALEN PPW 1780.

La composition obtenue est ensuite transformée en granulés ayant les mêmes forme et dimensions qu'à l'exemple 1.

Les valeurs obtenues pour la détermination du caractère collant (CC) exprimé par le temps (t) en secondes d'écoulement des granulés d'entonnoirs ayant des diamètres d'orifice de 14, 18 et 25 mm, après une durée de stockage de 1, 6 et 15 jours à température ambiante figurent au tableau ci-après.

Les valeurs obtenues pour la détermination de la résistance à l'écrasement (RE) exprimée par le temps (t') en secondes nécessaire aux granulés pour évacuer le récipient cylindrique après retournement figurent également au tableau ci-après.

## TABLEAU

| Exemple | (E) | (P) | CC (t) | | | | | | | | | RE (t') | | |
| | | | après 1 jour | | | après 6 jours | | | après 15 jours | | | après 1j. | 6j. | 15j. |
| | | | 14 | 18 | 25 | 14 | 18 | 25 | 14 | 18 | 25 | | | |
| 1 | 100 | 0 | * | * | 100 | * | * | 150 | * | * | * | * | * | * |
| 2 | 80 | 20 | 113 | 30 | 10 | 150 | 42 | 10 | 160 | 37 | 10 | 8 | 11 | 10 |
| 3 | 70 | 30 | 90 | 25 | 9 | 155 | 35 | 10 | 155 | 30 | 9 | 3 | 10 | 10 |

\* : bloc ne s'écoulant pas

## Revendications

1. Procédé permettant de diminuer de caractère collant et d'augmenter la résistance à l'écrasement d'un copolymère partiellement cristallin (E) de l'éthylène et d'au moins une alpha-oléfine, ayant une densité comprise entre 0,865 et 0,900, caractérisé en ce qu'il consiste à mélanger intimement ledit copolymère d'éthylène avec au moins un polymère ou copolymère non-atactique du propylène (P) ayant un indice de fluidité (mesuré selon la norme ASTM D 1238, condition L) compris entre 35 et 200 dg/min, en une proportion allant de 22 jusqu'à 50 parties en poids pour 100 parties en poids de copolymère d'éthylène, et en ce que la quantité de polymère ou copolymère (P) est telle que la proportion pondérale (q) de polymère ou copolymère (P) dans le mélange obtenu, exprimée en %, est reliée à la densité (d) du copolymère (E) par la relation $q \geq 600 - 667\,d$, et en ce que le taux de cristallinité du copolymère (E) est au moins égal à 1%.

2. Composition thermoplastique de copolymères d'éthylène et de polymère ou copolymère du propylène, caractérisée en ce qu'elle comprend, pour 100 parties en poids d'un copolymère partiellement cristallin (E) de l'éthylène et d'au moins une alpha-oléfine, ayant une densité comprise entre 0,865 et 0,900, de 22 à 50 parties en poids d'au moins un polymère ou copolymère non-atactique du propylène (P) ayant un indice de fluidité (mesuré selon la norme ASTM D 1238, condition L) compris entre 35 et 200 dg/min, et en ce que sa proportion pondérale (q) en polymère ou copolymère (P), exprimée en %, est reliée à la densité (d) du copolymère (E) par la formule :

$$q \geq 600 - 667\,d, \text{ et}$$

en ce que le copolymère (E) possède un taux de cristallinité d'au moins 1%.

3. Composition selon la revendication 2, caractérisée en ce que de polymère (P) est un polypropylène isotactique ayant une densité comprise entre 0,89 et 0.91, un indice d'isotacticité d'au moins 94% et un taux de cristallinité d'au moins 45%.

4. Composition selon l'une des revendications 2 et 3, caractérisée en ce qu'elle comprend en outre, pour 100 parties de la composition, jusqu'à 100 parties en poids de charges minérales ou organiques.

**5.** Procédé de préparation d'une composition conforme à l'une des revendications 2 à 4, caractérisé en ce qu'il consiste, lors de la préparation en continu du copolymère (E), à introduire dans le copolymère (E) fondu la quantité voulue de polymère ou copolymère (P) également à l'état fondu.

**Claims**

**1.** Process making it possible to reduce the adhesive nature and to increase the crushing resistance of a partially crystalline copolymer (E) of ethylene and of at least one alpha-olefin, having a density of between 0.865 and 0.900, characterised in that it consists in intimately blending the said ethylene copolymer with at least one nonatactic propylene polymer or copolymer (P) having a melt index (measured according to ASTM standard D 1238, condition L) of between 35 and 200 dg/min, in a proportion ranging from 22 to 50 parts by weight per 100 parts by weight of ethylene copolymer, and in that the quantity of polymer or copolymer (P) is such that the weight proportion (q) of polymer or copolymer (P) in the blend obtained, expressed in %, is related to the density (d) of the copolymer (E) by the relationship $q \geqq 600 - 667d$, and in that the degree of cristallinity of the copolymer (E) is at least 1%.

**2.** Thermoplastic composition of ethylene copolymers and of propylene polymer or copolymer, characterised in that it comprises, per 100 parts by weight of a partially crystalline copolymer (E) of ethylene and of at least one alpha-olefin, having a density of between 0.865 and 0.900, from 22 to 50 parts by weight of at least one nonatactic propylene polymer or copolymer (P) having a melt index (measured according to ASTM standard D 1238, condition L) of between 35 and 200 dg/min, and in that its weight proportion (q) of polymer or copolymer (P), expressed in %, is related to the density (d) of the copolymer (E) by the formula $q \geqq 600 - 667d$, and in that the copolymer (E) has a degree of cristallinity of at least 1%.

**3.** Composition according to claim 2, characterised in that the polymer (P) is an isotactic polypropylene which has a density of between 0.89 and 0.91, an isotacticity index of at least 94% and a degree of cristallinity of at least 45%.

**4.** Composition according to one of claims 2 and 3, characterised in that it additionally includes up to 100 parts by weight of inorganic or organic fillers per 100 parts of the composition.

**5.** Process for the preparation of a composition in accordance with one of claims 2 to 4, characterised in that it consists, during the continuous preparation of the copolymer (E), in introducing into the molten copolymer (E) the desired quantity of polymer or copolymer (P) also in the molten state.

**Patentansprüche**

**1.** Verfahren, das erlaubt, die Klebeeigenschaft eines teilweise kristallinen Copolymers (E) Von Ethylen und mindestens einem Alpha-Olefin, welches eine Dichte zwischen 0,865 und 9,00 besitzt, zu senken und dessen Druckfestigkeit zu erhöhen, dadurch gekennzeichnet, daß es darin besteht, das genannte Ethylencopolymer mit mindestens einem nicht ataktischen Propylenpolymer oder -copolymer (P), das einen (nach der Norm ASTM D 1238, Bedingung L, gemessenen) Fließindex zwischen 35 und 200 dg/min besitzt, in einer Menge von 22 bis 50 Gewichtsteilen auf 100 Gewichtsteile Ethylencopolymer intensiv zu mischen, daß die Menge des Polymers oder Copolymers (P) so ist, daß der Gewichtsanteil (q) des Polymers oder Copolymers (P) in der erhaltenen Mischung, ausgedrückt in %, mit der Dichte (d) des Copolymers (E) in der Beziehung $q \geq 600 - 667\ d$ steht, und daß der Kristallinitätsgrad des Copolymers (E) mindestens 1% beträgt.

**2.** Thermoplastische Zusammensetzung aus Ethylencopolymeren und Propylenpolymer oder -copolymer, dadurch gekennzeichnet, daß sie auf 100 Gewichtsteile eines teilweise kristallinen Copolymers (E) von Ethylen und mindestens einem Alpha-Olefin, welches eine Dichte zwischen 0,865 und 0,900 besitzt, 22 bis 50 Gewichtsteile mindestens eines nicht ataktischen Propylenpolymers oder -copolymers (P) enthält, das einen (nach der Norm ASTM D 1238, Bedingung L, gemessenen) Fließindex zwischen 35 und 200 dg/min besitzt, daß ihr Gewichtsanteil an Polymer oder Copolymer (P), ausgedrückt in %, mit der Dichte (d) des Copolymers (E) in Beziehung steht nach der Formel: $q \geq 600 - 667\ d$, und daß das Copolymer (E) einen Kristallinitätsgrad von mindestens 1% besitzt.

3. Zusammensetzung nach Anspruch 2, dadurch gekennzeichnet, daß das Polymer (P) ein isotaktisches Polypropylen mit einer Dichte zwischen 0,89 und 0,91, einem Isotaktizitätsindex von mindestens 94% und einem Kristallinitätsgrad von mindestens 45% ist.

4. Zusammensetzung nach Anspruch 2 oder 3, dadurch gekennzeichnet, daß sie weiters auf 100 Gewichtsteile der Zusammensetzung bis zu 100 Gewichtsteile mineralische oder organische Füllstoffe enthält.

5. Verfahren zur Herstellung einer Zusammensetzung nach einem der Ansprüche 2 bis 4, dadurch gekennzeichnet, daß es darin besteht, bei der kontinuierlichen Herstellung des Copolymers (E) in das geschmolzene Copolymer (E) die gewünschte Menge an Polymer oder Copolymer (P) ebenfalls in geschmolzenem Zustand einzubringen.